# EUROPÄISCHE PATENTSCHRIFT

(11) **EP 0 336 162 B1**
(45) Veröffentlichungstag und Bekanntmachung des Hinweises auf die Patenterteilung: **16.06.1993**
(21) Anmeldenummer: 89104675.7
(22) Anmeldetag: 16.03.1989
(51) Int. Cl.: A22C 21/00

(54) **Verfahren zum Gewinnen des Fleisches von den Körperngeschlachteten Geflügels und Vorrichtung zur Durchführung des Verfahrens**
Method and device for obtaining meat from slaughtered poultry
Procédé et dispositif pour recueillir la viande de volailles abattues

(30) Priorität: 02.04.1988 DE 3811317
(43) Veröffentlichungstag der Anmeldung: 11.10.1989
(73) Patentinhaber: NORDISCHER MASCHINENBAU RUD. BAADER GMBH + CO KG, 23560 Lübeck (DE)
(72) Erfinder: Callsen, Hans, Dipl.-Ing., D-2407 Bad Schwartau (DE); Meyer, Detlef, D-2400 Lübeck (DE); Muuhs, Peter, D-2400 Lübeck (DE)

(56) Entgegenhaltungen:
- EP-A- 0 118 963
- EP-A- 0 168 865
- EP-A- 0 183 986
- EP-A- 0 207 553
- EP-A- 0 261 420
- US-A- 4 557 017

## Beschreibung

Die Erfindung betrifft ein Verfahren zum Gewinnen des Fleisches von den Körpern geschlachteten Geflügels bzw. Teilen davon , sowie eine zu dessen Durchführung geeignete Vorrichtung.

Bei der Gewinnung des Fleisches von den Körpern geschlachteten Geflügels kommt der Behandlung des Bereiches um das Gabelbein große Bedeutung zu, insofern, als hier einerseits die erzielbare Ausbeute und andererseits das Bedürfnis des Nachtrimmens zur Erzielung der gewünschten Qualität entscheidend mitbestimmt wird. Das Gabelbein ist ein gabelförmiger Röhrenknochen, der die Flügelgelenke am Ende der Rabenbeine miteinander verbindet. Es ist in das Brustfleisch eingebunden, wobei der Kopfteil des Gabelbeins zu dem Kamm des Brustbeins weist, vor diesem endet und an diesem durch eine Sehne befestigt ist. Insbesondere bei der maschinellen Gewinnung des Fleisches bestehen große Probleme, das notwendige Lösen des Gabelbeins von dem Brustfleisch zu bewerkstelligen, nicht zuletzt aufgrund der Tatsache, daß bei einem erheblichen Teil der zu verarbeitenden Geflügelkörper das Gabelbein gebrochen ist. Die Ursachen dafür liegen in den vorbereitenden Arbeitsgängen. Das Gabelbein kann mehrfach und an beliebiger Stelle gebrochen oder getrennt sein. So kommt es relativ häufig vor, daß das Gabelbein aufgrund der Schnittführung beim Abtrennen der Flügel oder durch Kräfteeinwirkung bei diesem Vorgang an der Ansatzstelle im Bereich der Flügelgelenke gelöst oder in deren Nähe gebrochen ist. Während sich die manuelle Bearbeitung auf diese Gegebenheiten einzustellen vermag, birgt diese Sachlage die Gefahr in sich, daß Bruchstücke des Gabelbeins in dem Filet verbleiben. Ein Produkt dieser Qualität kann jedoch insbesondere wegen der Verletzungsgefahr an den bizarren Bruchflächen dieser Knochenteile nicht akzeptiert werden und erfordert daher das hinsichtlich Ausbeuteverlust und Zeitaufwand kostspielige Nachtrimmen.

Aus der EP-A1 168 865 ist ein Verfahren zum Gewinnen des Brustfleisches von Geflügelkörpern bekannt, welches auf eine Lösung der dargelegten Problematik ausgerichtet ist. Bei diesem Verfahren wird der Kopf des Gabelbeins vor dem Ablösen des Fleisches von dem Skelett entfernt. Zu diesem Zweck werden die als Vorderhälften präparierten Geflügelkörper auf einen durch einen Förderer bewegten Sattel aufgebracht und zunächst einem Werkzeug zugeführt, welches mit einem hakenförmigen Schneidstempel durch die vorauslaufende Halsöffnung hindurch in das Gabelbein unter Übergreifen des Gabelbeinkopfes eindringt. Der Schneidstempel wird dann aus der Bahn des Sattels zurückgezogen, so daß der durch Hinterhaken erfaßte Kopf des Gabelbeins mitgenommen und durch Eintauchen in eine Schneidmatrize von den beiden Ästen desselben abgeschert wird. Die an dem Skelett verbliebenen Äste des Gabelbeins werden anschließend durch entsprechende Mittel in eine für das Filetieren günstige Position gedrängt und das Brustfleisch abgeschoben.

Mit dieser bekannten Vorrichtung ist bei mehrfach oder im Bereich der Flügelgelenke gebrochenem Gabelbein nicht mit Sicherheit zu vermeiden, daß Teile desselben in dem Filetfleisch verbleiben.

Es ist daher die Aufgabe der Erfindung, ein Verfahren vorzuschlagen, welches diese Nachteile behebt und durch dessen Anwendung es möglich ist, das Brustfleisch unter hoher Ausbeute und Leistung trimmfrei zu gewinnen.

Diese Aufgabe wird erfindungsgemäß durch ein Verfahren gelöst, welches darin besteht, daß vor dem Abtrennen des Fleisches von dem Skelett das Gabelbein (clavicula) mindestens im Bereich seiner Äste von der Innenseite her formschlüssig fixiert und anschließend an seiner äußeren Kontur freigeschält und dabei die im Bereich der Körpergelenke der Flügel am Ende der Rabenbeine ansetzenden Sehnen durchtrennt werden.

Die mit diesem Verfahren erzielbaren Vorteile bestehen insbesondere darin, daß auch ein an beliebiger Stelle gebrochenes Gabelbein sicher als ganzes in Bindegeweben und Sehnen eingebunden bleibt, welche nach dem Ablösen des bzw. der Filets an dem Skelett verbleiben.

Von ihren Gliedmaßen befreite Geflügelkörper lassen sich gemäß diesem Verfahren vorteilhaft mittels einer Vorrichtung bearbeiten, welche einen angetriebenen Förderer umfaßt, der mit Haltemitteln bestückt ist zum Fördern der Geflügelkörper und Abstützen derselben an der Innenseite des Brustbeins(sternum), und welcher die Geflügelkörper mit dem Gabelbein (clavicula) voraus vorschiebt und dadurch gekennzeichnet ist, daß mittig über der Bahn der Haltemittel ein in deren Bahn einsteuerbarer und längs dieser bewegbarer Formklotz von in Draufsicht betrachtet keilförmiger Gestalt angeordnet ist, wobei die Flanken desselben eine Kontur beschreiben, die der Innenkontur des Gabelbeines im wesentlichen entspricht und mit nutartigen Aussparungen zur außen bündigen Aufnahme der Äste des Gabelbeines versehen sind, und daß ebenfalls über der Bahn der Haltemittel ein stationäres Schälwerkzeug angeordnet ist, bestehend aus einem Paar, gegeneinander gefederter und mit ihren Schneiden an den Flanken des Formklotzes und höhenausweichbar geführter und aus der Bahn der Haltemittel aussteuerbarer Schälmesser.

Die Bearbeitung von Burstkappen von Geflügelkörpern erfolgt zweckmäßigerweise auf eine Vorrichtung, bei welcher die Haltemittel eine Klemmeinrichtung umfassen, bestehend aus einem inneren und einem äußeren Klemmelement, in welcher Klemmeinrichtung die Brustkappen an dem Brustbein im Bereich zwischen den Ansatzstellen der Rabenbeine kraft- und/oder formschlüssig gehalten werden und welche dadurch gekennzeichnet ist, daß das äußere Klemmelement als Formklotz ausgebildet oder mit einem solchen versehen ist.

Die Erfindung wird nachfolgend anhand zweier in der Zeichnung dargestellter Ausführungsbeispiele näher erläutert. Es zeigt
- Fig. 1: eine vereinfachte Ansicht der Vorrichtung in axonometrischer Darstellung,
- Fig. 2: die Ansicht eines Haltemittels einer gemäß der Erfindung modifizierten Ausführung in axonometrischer Darstellung.

In einem nicht näher gezeigten Gestell einer Vorrichtung zum Gewinnen des Brustfleisches von den Körpern 1 geschlachteten Geflügels, hier von Vorderhälften solcher Körper, ist ein auf geeignete Weise umlaufend angetriebener, endloser Förderer 7 angeordnet, welcher mit in gleicher Teilung montierten Sätteln 8 für die Aufnahme der zu bearbeitenden Vorderhälften bestückt ist. Eine hier zur Verarbeitung kommende nicht vollständig dargestellte Vorderhälfte entsteht durch einen Schrägschnitt quer durch den Geflügelkörper 1 , welcher Schnitt unter Abtrennen des Beckens mit den Beinen etwa parallel zu den mit der Wirbelsäule verbundenen Rippen und Durchtrennen der Wirbelsäule verläuft. Jeder Sattel 8 ist mit einem Sattelhorn 9 ausgestattet, welches in Förderrichtung vorausweist und mit einer Stützfläche 10 für die Abstützung der zu bearbeitenden Vorderhälfte an der Innenseite des Brustbeins (sternum) 2 versehen ist. Aus der Stützfläche 10 ragt ein sich etwa über die Länge des Sattelhorns 9 erstreckender Steg 11 auf, dessen vorausweisender Teil eine Anlaufschräge 12 aufweist und der an dem nachlaufenden Ende mit einer Stirnfläche 13 endet, die dem aufgesattelten Geflügelkörper 1 als Anschlagfläche dient.

Oberhalb der durch die Stützflächen 10 der Sättel 8 bestimmten Förderbahn befindet sich die hier erfindungswesentliche Bearbeitungseinrichtung 14 für das Gabelbein (clavicula) 4 , der wie angedeutet ein Trennwerkzeug 15 mit einem Paar Kreismesser 16 zum Einschneiden zu beiden Seiten des kammartigen Steges des Brustbeins 2 vorausgeht. Das Trennwerkzeug 15 ist auf geeignete Weise aus einer Stellung außerhalb der Bahn des Geflügelkörpers in diese einschwenkbar gelagert. Das Einschwenken geschieht in Abhängigkeit von der Stellung des den nächst zu bearbeitenden Geflügelkörper tragenden Sattels 8 , wobei eine Abstimmung des Zeitpunktes so vorgenommen ist, daß die Einschnitte unmittelbar nach Passieren des Gabelbeins 4 erfolgen.

Die Bearbeitungseinrichtung 14 ist an einer gestellfesten Konsole 17 montiert. Die Bearbeitungseinrichtung 14 umfaßt nicht gezeigte Führungsmittel, die den Geflügelkörper 1 unter Zentrierung auf dem Sattel 8 niederhalten und besteht weiter aus einem im Bereich der Führungen oder diesen unmittelbar folgend angeordneten Formklotz 18 . Dieser ist mittig zu der Bahn der Sättel 8 angebracht und durch Einschwenken in deren Bahn mit den Sätteln 8 in formschlüssigen Kontakt bringbar. Die Schwenkbewegung des Formklotzes 18 besorgt ein synchron mit dem Förderer 7 mitlaufendes Kurvengetriebe 19. Zu diesem Zweck ist der Formklotz 18 an dem freien Ende eines Traghebels 20 angebracht, der mit seinem anderen Ende an einer quer zu der Bahn der Sättel 8 angeordneten gestellfesten Schwenkachse 21 befestigt ist. An dieser greift ein Schwenkhebel 22 an. Der Formklotz 18 ist in einer Position dargestellt, die der Endposition desselben nach Durchlauf eines Geflügelkörpers 1 etwa entspricht. Für diese Position hat zum einen die Kurvenscheibe 23 des Kurvengetriebes 19 gesorgt, die die Schwenkachse 21 über einen an dem Schwenkhebel 22 angreifenden, durch eine Feder 25 zurückgehaltenen Rollenstößel 24 verschwenkt hat, zum anderen die zeitweilige Mitnahme des Formklotzes 18 durch den Sattel 8 .

Der Formklotz 18 ist von in Draufsicht betrachtet keilförmiger Gestalt, wobei die Keilnase gegen die Bewegungsrichtung des Förderers 7 weist. Seine Flanken sind konvex ausgebildet und beschreiben eine Kontur, die der Innenkontur des Gabelbeins 4 im wesentlichen entspricht. Die Flanken des Formklotzes 18 sind weiter je mit einer nutartigen Aussparung 26 versehen, deren Verlauf und Querschnittsform so gewählt ist, daß die Äste des Gabelbeins 4 sich in diese einzulegen vermögen, wenn der Formklotz 18 in den V-Ausschnitt des Gabelbeins 4 geschwenkt wird , und außen bündig verschwinden, wenn die Keilnase des Formklotzes 18 an der Innenseite des Gabelbeinkopfes 5 anliegt. An der Unterseite ist der Formklotz 18 mit einer Längsnut 27 versehen, deren Querschnitt dem des Steges 11 auf dem Sattelhorn 9 entspricht.

Die Bearbeitungseinrichtung 14 umfaßt weiter ein Schälwerkzeug 31. Es besteht aus einem Paar symmetrisch zu der Bahn der Sättel 8 angeordneter Schälmesser 32 , deren Schneiden 33 gegen die Bewegungsrichtung des Förderers 7 und parallel zu den Flanken des Formklotzes 18 und an diesen entlanggleitbar ausgerichtet sind. Mindestens im unteren Bereich jedes Schälmessers 32 verläuft die Schneide 33 bogenförmig, so daß diese im oberen Bereich unter senkrechtem Verlauf beginnend sich zunehmend einem horizontalen Verlauf im Bereich des der Bahn der Sättel 8 zuweisenden Endes 34 nähert. Die Schälmesser 32 sind so eingestellt, daß deren Enden 34 sich unmittelbar über der Ebene der Stützflächen 10 der Sättel 8 befinden. Die Schälmesser 32 sind an Tragarmen 35 befestigt, die in senkrechten Ebenen schwenkbar gelagert sind, wobei die Schwenkung der Schälmesser 32 nach oben gegen die Kraft von Federn 36 erfolgt. Die Tragarme 35 sind je um eine senkrechte Achse 38 drehbar in der Konsole 17 gelagert. Die beiden Achsen 38 sind bezüglich ihrer Schwenkbewegung durch Synchronisationsmittel 39 gegenläufig synchronisiert. Darüberhinaus greift an einer dieser Achsen 38 ein Lenker 40 an, der über einen Kipphebel 41 mit einem Rollenstößel 42 in Verbindung steht, der sich auf einer zweiten Kurvenscheibe 43 des Kurvengetriebes 19 unter Kraft einer Feder 44 abstützen kann.

Die Wirkungsweise dieser Vorrichtung ist folgende: Ein von seinen Gliedmaßen durch Abtrennen der Flügel an ihren Körpergelenken 6 und der Beine durch einen das Becken mit den Beinen abtrennenden Querschnitt befreiter, und damit in Form einer Vorderhälfte vorliegender Geflügelkörper 1 wird mit dem Brustbein 2 nach oben und dem Gabelbein 4 vorausweisend auf einen Sattel 8 aufgesattelt. Dabei dringt das Sattelhorn 9 durch die Halsöffnung, so daß der Steg 11 zwischen den Rabenbeinen 3 zu liegen kommt und bis das Brustbein 2 an der Stirnfläche 13 des Steges 11 und auf der Stützfläche 10 des Sattels 8 zur Anlage kommt. Unmittelbar nach Vorbeigang des Gabelbeins 4 an dem Trennwerkzeug 15 tauchen dessen Kreismesser 16 zu beiden Seiten des Kammes des Brustbeins 2 in das Brustfleisch ein und losen dieses von den Flanken des Kammes.

Bei Eintreten des Sattels 8 in den Bereich der Bearbeitungseinrichtung 14 taucht zunächst der kurz vorher in die Bahn des Sattels 8 durch die Kraft der Feder 25 eingeschwenkte Formklotz 18 zwischen die Äste des Gabelbeins 4 ein, wobei der Steg 11 gleichzeitig in die Nut 27 an der Unterfläche des Formklotzes 18 unter Zentrieren desselben gegenüber dem Sattel 8 einläuft. Der Formklotz 18 verharrt nun so lange in der eingeschwenkten Position bis die vorausweisende Keilnase desselben an dem Kopf des Gabelbeines zur Anlage kommt. Damit haben sich auch die Äste des Gabelbeins 4 in die Aussparungen 26 an den Flanken des Formklotzes 18 eingelegt, so daß die Flanken desselben mit der Außenkontur des Gabelbeins 4 bündig stehen. Dieser Vorgang vollzieht sich in gleicher Weise bei gebrochenem Gabelbein 4 , da dieses in Bindegewebe und Sehnen eingebunden ist. Inzwischen wurden die neben den Flanken des Formklotzes 18 befindlichen Schälmesser 32 des Schälwerkzeuges 31 durch Schwenken der Achsen 38 vermittels der Kurvenscheibe 43 auseinandergesteuert, so daß die Körpergelenke 6 , an welchen auch das Gabelbein 4 mit seinen Ästen gelenkig anschließt, zwischen die Schälmesser 32 eintreten können. Im Augenblick, da dieses geschieht, werden die Schälmesser 32 zur gegenseitigen Annäherung freigegeben, so daß diese zunächst an der Außenflanke der Körpergelenke 6 anlegen. Im Verlauf des Vorschubs des Sattels mit dem Formklotz 18 laufen nun die Schneiden 33 an den unteren Enden 34 der Schälmesser 32 unter der Kraft der Federn 36 niedergehalten über die Kontur der Körpergelenke 6 und legen sich schließlich an den Flanken des Formklotzes 18 an. Während dieses Vorgangs wurden die mit den Innenfilets des Brustfleisches in Verbindung stehenden Sehnen durchtrennt. Unter der Kraft der Feder 44 folgen nun die Schälmesser 32 der Flankenkontur des Formklotzes 18 und lösen dabei die in den Aussparungen 26 in dessen Flanken eingelagerten Äste des Gabelbeins 4 aus dem Brustfleisch heraus. Im Bereich der Keilnase des Formklotzes 18 angekommen, haben die Schälmesser 32 eine Distanz zueinander erreicht, die der der Kreismesser 16 des Trennwerkzeuges 15 entspricht, so daß sie in den Freischnitten zu beiden Seiten des Kammes des Brustbeins 2 ohne weitere Wirkung freigehen können. Nach dem Freischälen des Gabelbeins 4 wird der Formklotz 18 vermittels der Kurvenscheibe 24 in Förderrichtung der Sättel 8 beschleunigt und damit aus der Bahn der Sättel 8 ausgeschwenkt. Nach Austritt der Schälmesser 32 aus den Einschnitten neben dem Kamm des Brustbeins werden diese vermittels der Kurvenscheibe 43 wieder auseinandergesteuert, so daß ein neuer Zyklus folgen kann.

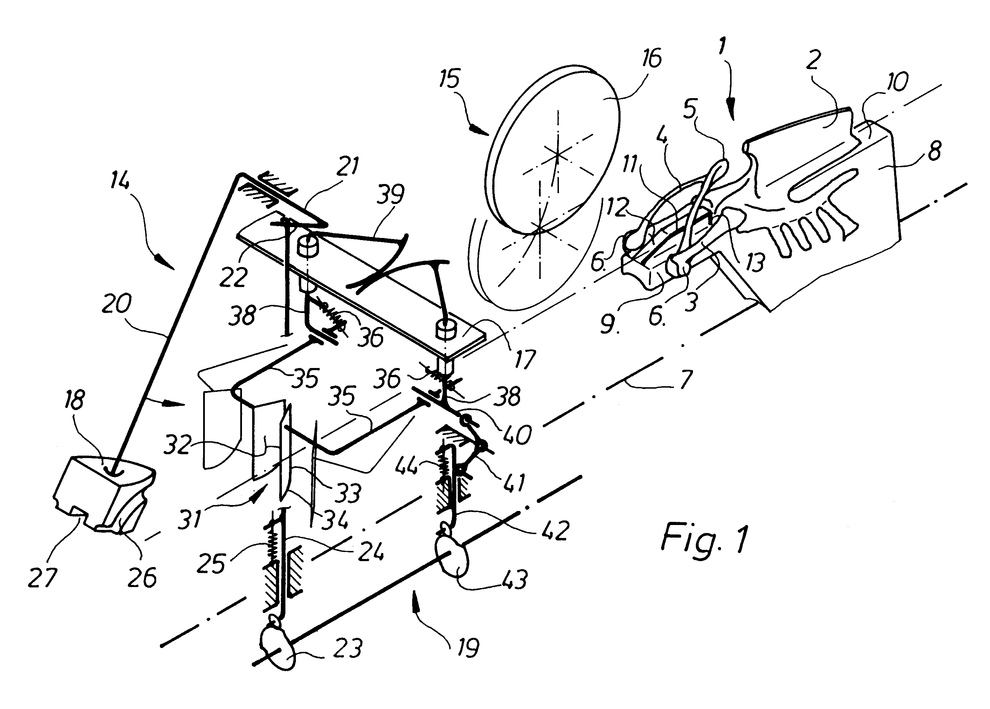

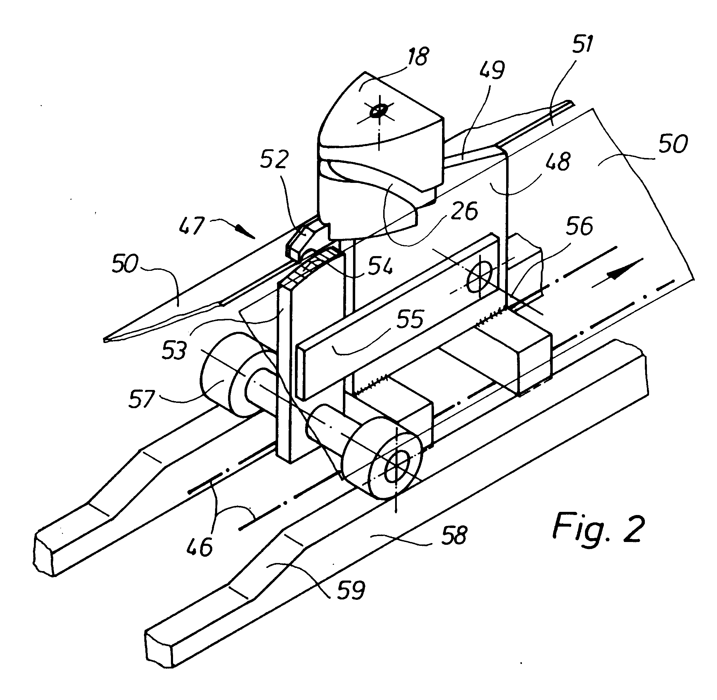

Eine für die Verarbeitung von in Form von Brustkappen vorliegenden Geflügelkörpern geeignete Vorrichtung ist in Fig. 2 dargestellt. Der Förderer 46 ist hier mit Haltemitteln bestückt, welche als Zangen 47 für die Halterung der Brustkappen der Geflügelkörper ausgebildet sind. Sie sind ebenfalls in gleicher Teilung auf dem Förderer 46 montiert und bestehen je aus einem festen Zangenschenkel 48 , der in geeigneter Weise in dem nicht dargestellten Gestell geführt ist. Der feste Zangenschenkel 48 ist vorzugsweise als Steg ausgebildet, der sich längs der Förderrichtung erstreckt und mit seinem Kopfteil 49 zwischen einem Paar dachartig geneigter, gestellfester und einen Spalt 51 zwischen sich belassender Führungsbleche 50 herausragt. Aus Gründen der Übersichtlichkeit ist das vordere quasi durchsichtig dargestellt. Das Kopfteil 49 endet an seinem nachlaufenden Teil in einer Gegenhaltenase 52 , deren Unterseite griffig ausgestaltet ist und über den Führungsblechen 50 liegend angeordnet ist. Der Unterseite der Gegenhaltenase 52 liegt die Stirnfläche 54 eines beweglichen Zangenschenkels 53 gegenüber, der mittels eines gabelförmigen Haltearms 55 um eine horizontale Achse 56 schwenkbar an dem festen Zangenschenkel 48 gelagert ist. An dem beweglichen Zangenschenkel 53 greifen Laufrollen 57 an, die sich auf gestellfesten Führungsschienen 58 abstützen. Diese weisen an geeigneten Stellen zur Förderebene geneigt verlaufende Bereiche 59 auf, so daß die darüber hinweglaufenden Laufrollen 57 auf den beweglichen Zangenschenkel 53 eine Vertikalbewegung übertragen. Auf jedem Kopfteil 49 ist ein demjenigen aus Fig. 1 entsprechender Formklotz 18 montiert. Seine Keilnase steht dabei etwas hinter dem Ende der Gegenhaltenase 52 zurück.

Die Arbeitsweise dieser Vorrichtung ist folgende:
Eine zu bearbeitende Brustkappe, die etwa die Gestalt des in Fig. 1 unvollständig dargestellten Geflügelkörpers 1 hat, wird mit der Unterseite des Brustbeins 2 auf die dachförmigen Führungsbleche 50 aufgelegt, und mit dem Gabelbein 4 voraus gegen eine durch den Förderer 46 fortbewegte, geöffnete Zange 47 geschoben. Dabei dringt zunächst die Gegenhaltenase 52 in den Ausschnitt zwischen den Rabenbeinen 3 , und unmittelbar darauf der Formklotz 18 in die Gabelung des Gabelbeins 4 ein. Die Gegenhaltenase 52 erreicht schließlich das zwischen den Ansatzstellen der Rabenbeine 3 an dem Brustbein 2 befindliche Ende desselben, wobei sich die Unterseite der Gegenhaltenase 52 auf die dort befindliche Knochenplatte unter Verdrängen der auf dieser aufliegenden Fleischteile aufschiebt. Gleichzeitig haben sich die Äste des Gabelbeins 4 in die Aussparungen 26 des Formklotzes 18 eingelegt. Inzwischen sind die Laufrollen 57 des beweglichen Zangenschenkels 53 in den ansteigenden Bereich 59 der Führungsschienen 58 gelangt, so daß sich die Zange 47 schließt und die zu bearbeitende Brustkappe sicher festhält. Es kann nun in der beschriebenen Weise eine maschinelle oder auch manuelle Bearbeitung erfolgen, nach welchem Vorgang die Zange 47 mittels entsprechend gestalteter Bereiche der Führungsschienen 58 geöffnet wird.

Die vorstehend beschriebenen Vorrichtungen lassen sich auch in der Weise modifizieren, daß als Endprodukt ein sogenanntes "Butterfly-Filet" erzielbar ist. Kennzeichen dieses Produktes ist, daß die zu beiden Seiten des Brustbeins 2 befindlichen Fleischteile miteinander verbunden bleiben. Die Schälmesser 32 werden zu diesem Zweck bei Erreichen ihrer engsten Stellung, d. h. nach Passieren des Gabelbeinkopfes 5 nach oben aus der Bahn der Sättel 8 ausgesteuert, was mittels einer in dem Kurvengetriebe 19 vorzusehenen weiteren Kurvenscheibe geschehen könnte. Weiter sind dann im Filetierteil der Maschine Schabemittel vorgesehen, die von den durch die Schälmesser 32 erzeugten Einschnitten ausgehend das Fleisch von dem Grätengerüst abschieben.

## Patentansprüche

1. Verfahren zum Gewinnen des Fleisches von den Körpern geschlachteten Geflügels bzw. Teilen davon, **dadurch gekennzeichnet,** daß das Gabelbein (clavicula) (4) mindestens im Bereich seiner Äste von der Innenseite her formschlüssig fixiert und anschließend an seiner äußeren Kontur freigeschält und dabei die im Bereich der Körpergelenke (6) der Flügel am Ende der Rabenbeine (3) ansetzenden Sehnen durchtrennt werden, und daß anschließend das Abtrennen des Fleisches von dem Skelett erfolgt.

2. Vorrichtung zur Durchführung des Verfahrens nach Anspruch 1 , mit einem angetriebenen Förderer, welcher mit Haltemitteln bestückt ist zum Fördern der von ihren Gliedmaßen befreiten Geflügelkörper und Abstützen derselben an der der Körperhöhle zuweisenden Innenseite des Brustbeins (sternum) (2) , und welcher die Geflügelkörper mit dem Gabelbein (clavicula) (4) voraus vorschiebt, **dadurch gekennzeichnet,** daß mittig über der Bahn der Haltemittel (8) ein in deren Bahn einsteuerbarer und längs dieser bewegbarer Formklotz (18) von in Draufsicht betrachtet keilförmiger Gestalt angeordnet ist, wobei die Flanken desselben eine Kontur beschreiben, die der Innenkontur des Gabelbeins (4) im wesentlichen entspricht und mit nutartigen Aussparungen (26) zur außen bündigen Aufnahme der Äste des Gabelbeins (4) versehen sind, und daß ebenfalls über der Bahn der Haltemittel (8) ein stationäres Schälwerkzeug (31) angeordnet ist, bestehend aus einem Paar, gegeneinander gefederter und mit ihren Schneiden (33) an den Flanken des Formklotzes (18) und höhenausweichbar geführter und aus der Bahn der Haltemittel (8) aussteuerbarer Schälmesser.

3. Vorrichtung nach Anspruch 2 , bei welchem die Haltemittel eine Klemmeinrichtung für die Halterung von Brustkappen von Geflügelkörpern umfassen,bestehend aus einem inneren und einem äußeren Klemmelement, in welcher Klemmeinrichtung die Brustkappen an dem Brustbein (2) im Bereich zwischen den Ansatzstellen der Rabenbeine (3) kraft- und/oder formschlüssig gehalten werden, **dadurch gekennzeichnet,** daß das äußere Klemmelement (48) als Formklotz (18) ausgebildet oder mit einem solchen versehen ist.

## Claims

1. Method for the gaining of flesh from the carcasses of slaughtered poultry or parts thereof, characterised thereby that the wishbone (clavicula) (4) is mechanically positively fixed in position out from the inner side at least in the region of its branches and then cut free at its outer contour and thus the ligaments fixed to the end of the cartilage bones (3) in the region of the body joints (6) of the wing are severed, and that then the separation of the flesh from the skeleton takes place.

2. Device for the performance of the method according to claim 1, with a driven conveyor, which is equipped with retaining means, for the conveying of poultry carcasses freed of their limbs and for the support thereof at the inner side of the breastbone (sternum) (2) facing towards the body cavity, and which advances the poultry carcasses with the wishbone (clavicula) (4) foremost, characterised thereby that arranged centrally above the path of the retaining means (8) is a shaped block (18) which is drivable into the path thereof and movable along this and which is of wedge-shaped form seen in plan view, wherein the flanks thereof define a contour, which substantially corresponds to the inner contour of the wishbone (4), and are provided with groove-shaped cutouts (26) for the reception, outwardly flush, of the branches of the wishbone (4) and that similarly arranged above the path of the retaining means (8) is a stationary paring tool (31) consisting of a pair of paring knives which are spring-loaded towards one another, are guided by their edges (33) at the flanks of the shaped block (18) and to be yielding in height, and are drivable out of the path of the retaining means (8).

3. Device according to claim 2, in which the retaining means comprises a clamping equipment for the holding of the breast crowns of poultry carcasses, consisting of an inner and an outer clamping element, in which clamping equipment the breast crowns of the breastbone (2) are held by force and/or shape engagement in the region between the attachment locations of the cartilage bones (3), characterised thereby that the outer clamping element (4) is constructed as a shaped block (18) or provided with such.

## Revendications

1. Procédé d'obtention de la chair de corps de volailles abattues ou d'une partie de celle-ci, caractérisé en ce que la clavicule (4) est fixée, au moins au niveau de ses branches, par le côté intérieur et en épousant sa forme et qu'elle est ensuite dégagée le long de son contour extérieur, les tendons situés à proximité des articulations (6) des ailes et attachés aux extrémités des coracoïdes (3) étant en même temps sectionnés, et en ce qu'ensuite, la chair est détachée du squelette .

2. Dispositif de mise en oeuvre du procédé de la revendication 1, comprenant un transporteur entraîné muni de moyens de fixation, pour le transport des corps de volailles démunis de leurs extrémités et pour le support de ces corps par le côté intérieur du sternum (2) faisant face à la cavité du corps, le transporteur transportant des corps de volailles avec les clavicules (4) en avant, caractérisé en ce qu'une pièce (18) ayant, vue de dessus, une forme générale de coin, est disposée de manière centrée au dessus du trajet des moyens de fixation (8), la pièce (18) étant disposée de façon à pouvoir être introduite sur et mûe le long de ce trajet, les flancs de la pièce définissant un contour correspondant sensiblement au contour intérieur de la clavicule (4) et étant munis d'évidements (26) ayant une forme générale de rainure et destinés à recevoir, affleurantes, les branches de la clavicule (4), et en ce qu'un outil d'écroûtage (31) est également disposé au dessus du trajet des moyens de fixation (8), cet outil comprenant une paire de coûteaux, montés élastiquement l'un contre l'autre et guidés par leur tranchant (33), déviable en hauteur, le long des flancs de la pièce (18) et pouvant être sortis du trajet.

3. Dispositif selon la revendication 2, caractérisé en ce que les moyens de fixation comprennent des moyens de serrage destinés à tenir des poitrails de corps de volailles, comportant un élément de serrage intérieur et un élément de serrage extérieur, les poitrails étant tenus, en épousant leur forme et/ou par adhérence, dans la partie entre les points de départ des coracoïdes (3), caractérisé en ce que l'élément de serrage extérieur (48) est formé comme une pièce (18) ou comprend une telle pièce (18).
